(19) Europäisches Patentamt / European Patent Office / Office européen des brevets

(11) EP 1 957 564 B1

(12) **EUROPÄISCHE PATENTSCHRIFT**

(45) Veröffentlichungstag und Bekanntmachung des Hinweises auf die Patenterteilung:
**23.02.2011 Patentblatt 2011/08**

(21) Anmeldenummer: **05825296.6**

(22) Anmeldetag: **22.12.2005**

(51) Int Cl.:
*C08G 77/26* (2006.01) *C08G 77/54* (2006.01)
*C08G 77/18* (2006.01) *C08G 77/46* (2006.01)
*C08G 77/388* (2006.01) *C08L 83/08* (2006.01)
*C08L 83/12* (2006.01) *C08L 83/14* (2006.01)
*C08J 3/215* (2006.01) *B01J 20/26* (2006.01)
*C09D 183/12* (2006.01) *D06M 15/643* (2006.01)
*D06M 15/647* (2006.01)

(86) Internationale Anmeldenummer:
**PCT/EP2005/057133**

(87) Internationale Veröffentlichungsnummer:
**WO 2006/067225 (29.06.2006 Gazette 2006/26)**

(54) **VERNETZTE AMINO-POLYORGANOSILOXAN-VERBINDUNGEN SOWIE SIE ENTHALTENDE ZUSAMMENSETZUNGEN**

CROSS-LINKED AMINO-POLYORGANOSILOXANE COMPOUNDS AND COMPOSITIONS CONTAINING THEM

COMPOSES AMINO-POLYORGANOSILOXANE RETICULES ET COMPOSITIONS LES CONTENANT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.12.2004 DE 102004062975**

(43) Veröffentlichungstag der Anmeldung:
**20.08.2008 Patentblatt 2008/34**

(73) Patentinhaber: **Momentive Performance Materials GmbH**
**51368 Leverkusen (DE)**

(72) Erfinder:
- **LANGE, Horst**
**44879 Bochum (DE)**
- **HILGERS, Christoph**
**50226 Frechen (DE)**
- **WAGNER, Roland**
**53227 Bonn (DE)**
- **SOCKEL, Karl-heinz**
**51373 Leverkusen (DE)**

(74) Vertreter: **Gille Hrabal Struck Neidlein Prop Roos**
**Postfach 18 04 09**
**40571 Düsseldorf (DE)**

(56) Entgegenhaltungen:
**WO-A-2004/063266**
**US-A- 4 049 692**
**US-A- 4 246 423**
**US-A- 5 998 650**
**US-A1- 2002 120 057**
**US-A1- 2004 138 400**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 957 564 B1

## Beschreibung

Die Erfindung betrifft vernetzte Amino-Polyorganosiloxan-Verbindungen und Salze davon, die durch kondensierende Vernetzung von Amino-Polyorganositoxan-Ausgangsverbindungen und Salzen davon in Gegenwart von Wasser erhältlich sind, Zusammensetzungen, die die vernetzten Amino-Polyorganosiloxan-Verbindungen und Salze davon sowie mindestens einen weiteren funktionalen Bestandteil enthalten, sowie die Verwendung der vernetzten Amino-Polyorganosiloxan-Verbindungen oder deren Salze sowie der sie enthaltenden Zusammensetzungen. Die erfindungsgemäßen vernetzten Amino- Polyorganosiloxan-Verbindungen sind insbesondere geeignet, zur Bildung von mit funktionalen Bestandteilen gefüllten Siloxanblockcopolymer-Netzwerken. Diese sind vorwiegend hydrophil gleichzeitig verfügen sie jedoch auch über ambivalente Löslichkeitseigenschaften, d.h. sie weisen auch eine begrenzte Löslichkeit gegenüber unpolaren Medien auf, weshalb sie wiederum verschiedene neue Anwendungen finden können.

Es sind verschiedenartige hydrophilierte, siloxanhaltige Materialien bekannt geworden.

Hinsichtlich einer physikalischen Kombination ist z.B. vorgeschlagen worden, in ein Acrylatpolymer Polyorganosiloxane fein verteilt einzulagern (US 4 322 517). Andererseits ist es bekannt, eine wässrige Stärkelösung und eine Aminosilicon-ölemulsion zu einem gelartigen Material zu kombinieren (US 5 062 971).

Zur Hydrophilierung von Siloxannetzwerken ist es u.a. bekannt, vernetzbare Polyorganosilolansysteme mit kohlenwasserstoff- (US.6 552 104) oder siloxanbasierten nichtionogenen Tensiden (US 4 657 959, US-4 691 039, US 4 752 633) zu versetzen. Es werden nur semipermanent hydrophile Materialien erhalten. In Abwandlung dieses Konzepts kann die Vernetzung des Siloxans in Emulsionen von nichtionogenen Tensiden erfolgen (US 6 403 704, US 2002-0193513).

Eine permanente Hydrophilierung von Siloxanen kann durch Nutzung hydrophiler Comonomerer gesichert werden.

Es ist hierzu vorgeschlagen worden, hydrophile Acrylatmonomere mit siloxanmodifizierten Acrylatmonomeren zu kombinieren (US 6 251 837, US 4 343 927, US 5 314 960). Zur Verstärkung des hydrophilen Charakters können polyethermodifizierte Siloxanacrylatmonomere eingesetzt werden ((US 6 440 571, US 4 851 216, US 4 833 218). Ebenfalls bekannt ist die Kombination von Isocyanatomelhylmethacrylat mit Siloxanpolyethern (US 4 584 337, US 4 600 751).

Die Hydrosilyliernng von N,N-diallyl-funktionalisierten Aminopolvethern mit SiH-Siloxanen führt bei Einhaltung bestimmter Mindestfunklionalitäten ebenfalls zu vernetzten Systemen (US 5 998 650).

Alternativ sollen primäre oder sekundäre Aminofunktionen tragende Polyether mit cyanurchlorid-modifizierten Siloxanen zu vernetzbaren Materialien reagieren können (US 6 043 362).

In US 6 585 985 werden verschiedene Strategien zur Herstellung hydrophiler, vernetzter Siloxane erwähnt:

- Hydrosilylierung von SiH-Siloxanen mit alpha,omega-ungesättigten Polyethern,
- radikalische Copolymerisation von geeigneten siloxansubstituierten Monomeren mit hydrophilen Comonomeren
- Hydrosilylierung von SiH-Siloxanen mit alpha,omega-Acryloylestern von Polyethern
- Reaktion von Aminosiloxanen mit alpha,omega-glycidylsubstituierten Polyethern
- Veresterung von carbonsäuremodifizierten Siloxanen mit Polyalkylenglycolen
- Hydrosilylierung von SiH-funktionalisierten Polyethersiloxanen mit Vinylsiloxanen oder Diolefinen.

SiOC-verknüpfte hydrophile Siloxane sind beispielsweise durch Reaktion von Siloxanolen mit Dicarbonsäuren und Diolen zugänglich (US 132 392).

Neben den vorstehend für hydrophile Siloxannetzwerke behandelten Vemetzungskonzepten unter Knüpfung von C-C-, NC- und SiOC-Bindungen sind Vorschläge bekannt, die auf die Knüpfung von SiOSi-Bindungen zielen. Alpha, omega-Alkoxysilylsubstituierte Polyether werden in US 4 758 646 und US 4 859 529 beschrieben. Durch Hydrolyse werden Disiloxan-verbrückte, vernetzte Strukturen erhalten. Die Äquilibrierung von polyethermodifizierten Silanen, SiOH-funktionalisierten Siloxanen, $SiCl_4$ und beispielsweise Triethoxysilan liefert komplexe Strukturen, die über Polyether und Alkoxyeinheiten verfügen (US 5 484 871). Vernetzungsfähige Polyether- und Aminosiloxane, die über zusätzliche hydrolysefähige SiOR- und SiOC(O)R-Srtuktsuen verfügen, werden in US 2002-0120057 behandelt Anwendungsfelder dieser Materialien sind die Faser- und Haarbehandlung. Keine der vorgenannten Lösungen beschreibt, wie hochgradig mit Wasser und/oder polaren organischen Flüssigkeiten gefüllte, siloxanhaltige Netzwerke hergestellt werden können, wobei gleichzeitig mit der Einbringung von Wasser und/oder polaren organischen Flüssigkeiten fein dispergierte oder gelöste Funktionalmoleküle als funktionale Bestandteile im Netzwerk verteilt werden sollen.

Es ist somit Aufgabe der Erfindung, die Synthese stark hydrophiler Siloxanblockcopolymernetzwerke und deren Verwendung als wäßrig und/oder polar organisch gefüllte funktionale Bestandteile bzw. Funktionalsysteme zu beschreiben. Hierbei ist einerseits wesentlich, dass die Netzwerkbildung zu einem definierten und wählbaren Zeitpunkt erfolgt. Andererseits soll es möglich werden, die Funktionalmoleküle in molekular gelöster, emulgierter oder dispergierter Form homogen im gebildeten siloxanhaltigen Netzwerk zu verteilen.

Die vorliegende Erfindung stellt somit vernetzte Amino-Polyorganosiloxan-Verbindungen und deren Salze bereit, die erhältlich sind durch kondensierende Vernetzung von Amino-Polyorganosiloxan-Ausgangsverbindungen und deren Salzen in Gegenwart von Wasser, die mindestens eine funktionelle Gruppe der Formel (1):

$$-Si(OR)_{3-a}(R')_a \qquad (I)$$

worin 'a' eine ganze Zahl von 0 bis 2 ist und R und R' gleich oder verschieden voneinander sein können und jeweils einen organischen Rest darstellen, und mindestens eine Polyalkylenoxy-Gruppe aufweisen, wie im Anspruch 1 definiert.

Vernetzte Verbindungen im Sinne der Erfindung werden erhalten in dem man Ausgangsverbindungen verwendet, die pro Molekül eine Funktionalität mit Einheiten der Fore ml (I) von > 2 besitzen. Die Funktionalität der Ausgangsverbindung kann eingestellt werden über die Anzahl der funktionellen Gruppen der Formel (I) und/oder über die Zahl der reaktiven Gruppen in der funktionellen Gruppe der Formel (I) (abhängig von 'a'). Für den Fall, dass die funktionellen Gruppen der Formel (I) statistisch über die Ausgangsverbindung verteilt sind, erhält man relativ kurze Netzbögen zwischen den Vernetzungspunkten. Hingegen führt die blockartige Anordnung der funktionellen Gruppe der Formel (I) bei gleicher Konzentration zu längeren Netzbögen und damit anderen physikalischen Eigenschaften. Blockartige Anordnungen der funktionellen Gruppe der Formel (I) lassen sich beispielsweise dadurch erzeugen, dass die Vorstufen der Ausgangsverbindungen, die die funktionelle Gruppe der Formel (I) enthalten, in einer vorgelagerten Reaktion in ein Präpolymer überführt werden und anschließend mit den restlichen Komponenten zur Ausgangsverbindung umgesetzt werden. Statistische Anordnungen der funktionellen Gruppe der Formel (I) können entsprechend durch gleichzeitige Reaktion der Vorstufen der Ausgangsverbindungen erhalten werden. Die statistisch verteilten Anordnungen ergeben eher Netzwerke mit niedrigeren Bruchdehnung.

Bei der Polyalkylenoxy-Gruppe handelt es sich bevorzugt um einwertige oder zweiwertige statistische oder blockartige Ethylenoxid/Propylenoxid-Copolymereinheiten. Diese können beispielsweise durch die Verwendung von Polvalkylenoxy-Bis-epoxidverbindungen in die Amino-Polyorganosiloxan-Verbindungen eingeführt werden. Dabei werden Strukturelemente der folgenden Formel erzeugt:

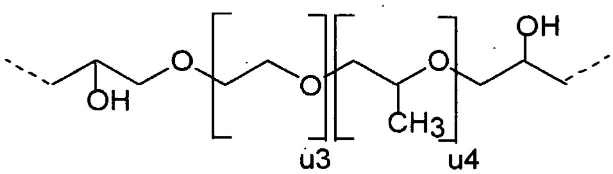

,

worin u3 und u4 wie unten definiert sind.

Weiterhin kann die Polyalkylenoxy-Gruppe durch die Verwendung von Polyalkylenoxy-Bishalogencarbonsäureester, wie Bis-Chloressigsäureester-, Bis-Chlorpropansäureester-Polyalkylenoxid-Verbindungen, in die die Aminoalkylpolyorganosiloxan-Verbindungen eingeführt werden, wodurch Strukturelemente der folgenden Struktur ausgebildet werden:

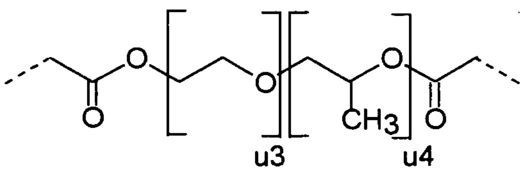

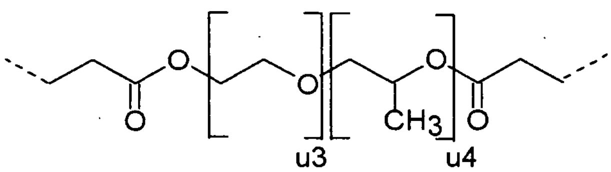

,

worin u3 und u4 wie unten definiert sind.

Eine weitere Variante ist die Einführung von Polyalkylenoxidresten in der Form Polyalkylenoxy-Gruppen-enthaltender Diamine, wie insbesondere solche der Jeffamine®-Reihe (Huntsman). Diese führen zur Ausbildung der folgenden Strukturelemente:

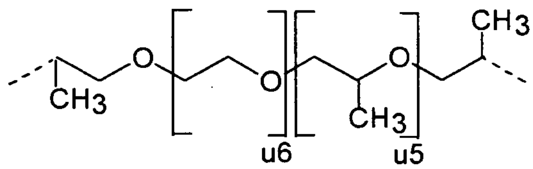

speziell

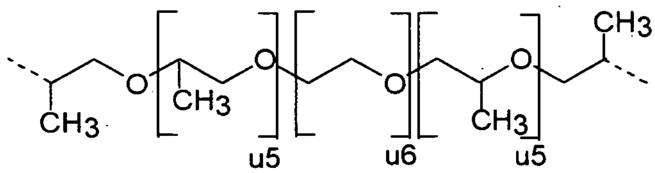

,

worin u5 und u6 wie unten definiert sind.

Monofunktionelle statistische oder blockweise Ethylenoxid/Propylenoxid CopolymerEinheiten der Struktur

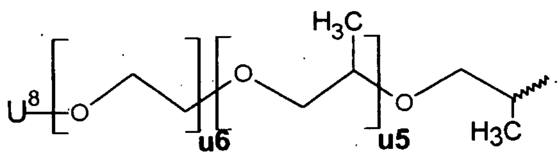

,

worin $U^8$ und u5 und u6 wie unten definiert sind, resultieren beispielsweise aus der Verwendung von Polyatkylenoxy-Gruppen enthaltenden Monoaminen.

In den vorstehend erwähnten Formeln bedeuten:

u3 = 0 bis 100,
u4 = 0 bis 100,
u3+u4> 1.
u5 = 1 bis 100,
u6 = 1 bis 100,

$U^8$ ist ein einwertiger, geradkettiger, cyclischer oder verzweigter, gesättigter, ungesättigter oder aromatischer Kohlenwasserstoffrest mit bis zu 12 Kohlenstoffatomen, der eine oder mehrere Gruppen -O- und/oder -CO- enthalten und durch ein oder mehrere OH-Gruppen substituiert sein kann, beispielsweise Methyl, Ethyl, Isopropyl, Cyclohexyl, 2-Ethyl-Hexyl, Hexyl, Phenyl, Styryl, Methoxyethomethyl, Acetyl, Hexanoyl, 2-Ethyl-hexanoyl, Octoyl, iso-Octoyl, Decanoyl, Nonanoyl etc.

Die Anwesenheit der Polyalkylenoxy-Gruppe ist erfindungswesentlich, da nur so eine ausreichende Hydrophilie bzw. geeignete Löslichkeitsparameter gegenüber polaren Quellmitteln bzw. funktionalen Bestandteilen, wie Wasser, der vernetzten Amino-Polyorganosiloxan-Verbindungen erzielt werden können.

Amino-Polyorganosiloxan-Verbindungen und Salze davon im Sinne der Erfindung sind Verbindungen, die mindestens eine bevorzugt mindestens zwei, noch bevorzugter mehr als vier Aminogruppen und bevorzugt mindestens eine, noch bevorzugter mindestens zwei, noch bevorzugter mindestens vier Polyorganosiloxanblöcke je Molekül aufweisen, oder Salze davon. Die Verbindungen bestehen bevorzugt aus wiederkehrenden Einheiten, die die genannten Aminogruppen und die genannten Polyorganosiloxanblöcke enthalten.

Bei der genannten funktionellen Gruppe der Formel (I) handelt es sich um eine reaktive Gruppe, die beim Aktivieren, z.B. beim Einwirken von Temperaturen von zweckmäßig mindestens 10 °C, vorzugsweise 40 °C, bevorzugter 80 °C, noch bevorzugter mindestens etwa 100 °C und/oder von Katalysatoren, wie Säuren oder Basen, beispielsweise unter Kondensation und/oder Umlagerung und Austritt von bevorzugt Alkoholen reagieren.

Geeignete Säuren als Katalysatoren schließen z.B. anorganische Säure, wie z.B. Salzsäure, Schwefelsäure, Phosphorsäure etc. oder organische $C_1$-$C_{22}$-Carbonsäuren ein. Geeignete Basen als Katalysatoren schließen z.B. anorganische Basen, wie Alkalimetallhydroxide, Erdalkalimetallhydroxide, Ammoniak, und organische Basen, wie z.B. $C_1$-$C_{22}$-Alkylamine ein.

Die Kondensation führt unter Austritt von Alkoholen in Gegenwart von Wasser in an sich bekannter Weise zur Bildung von Si-O-Si-Vernetzungs-Gruppen.

In der funktionellen Gruppe der Formel (I)

$$-Si(OR)_{3-a}(R')_a \qquad (I)$$

ist 'a' eine ganze Zahl von 0 bis 2, und R und R' sind gleich oder verschieden voneinander und stellen jeweils einen organischen Rest dar. "a" ist 0, 1 oder 2, wobei 0 bevorzugt ist. R' wird bevorzugt aus der Gruppe ausgewählt, die aus $C_1$ bis $C_{22}$-Alkyl, Fluor-($C_3$-$C_{10}$)-alkyl und $C_6$-$C_{10}$-Aryl besteht Besonders bevorzugt ist R' Methyl. R wird bevorzugt aus der Gruppe ausgewählt, die aus $C_1$ bis $C_{22}$-Alkyl, $C_5$ bis $C_{10}$-Cycloalkyl, $C_7$ bis $C_{18}$-Alkylaryl, $C_7$ bis $C_{18}$-Arylalkyl und $C_6$-$C_{10}$-Aryl besteht. Bevorzugt wird R ausgewählt aus sekundären oder tertiären Alkylgruppen oder sterisch anspruchsvollen Gruppen, wie Bis(tert-butyl)phenyl, Cyclohexyl, Besonders bevorzugt ist R gleich Isopropyl, sek.-Butyl, tert-Butyl und sek- Amyl.

Die Gruppe der Formel (I) wird im folgenden gelegentlich als Alkoxysilyl-Gruppe bezeichnet. Die erfindungsgemäß verwendeten Amino-Polyorganesiloxan-Ausgangsverbindungen enthalten mindestens eine Gruppe der Formel (I), die sie zur Vernetzung in Gegenwart von Wasser befähigt. Bevorzugt enthalten die erfindungsgemäß verwendeten Amino-Polyorganosiloxan-Ausgangsverbindungen von 0,01 bis 50 mol-%, bevorzugt 1 bis 50 mol-%, bevorzugter 5 bis 50 mol%, noch bevorzugter 10 bis 50 mol% Gruppen der Formel (1) bezogen auf die Summe de Gruppen Q und V im Molekül.

Bei den im Anspruch 1 genannten Amino-Polyorganosiloxan-Ausgangsverbindungen handelt es sich bevorzugt um solche Verbindungen, die mindestens drei Einheiten, bevorzugt mindestens 4, noch bevorzugter mindestens 6 Einheiten, ausgewählt aus den Einheiten Q und V aufweisen, worin Q eine Aminogruppe ist, die nicht über ein Carbonylkohlenstoffatom an V gebunden ist, und V mindestens eine organische Einheit ist, die über Kohlenstoff mit den Q-Einheiten verbunden ist, mit der Maßgabe, dass mindestens eine der Einheiten V einen Polyorganosiloxanrest enthält. Bevorzugt enthalten die erfindungsgemäß verwendeten Amino-Polyorganosiloxan-Ausgangsverbindungen mindestens zwei, bevorzugter mindestens vier, noch bevorzugter mindestens sechs Einheiten V, die einen Polyorganosiloxanrest enthalten. In einer weiteren bevorzugten Ausfübrungsform enthalten die erfindungsgemäß verwendeten Amino-Polyorganosiloxan-Ausgangsverbindungen mindestens zwei, bevorzugt mindestes vier, noch bevorzugter mindestens sechs Einheiten Q.

Die Einheit Q wird ausgewählt aus der Gruppe ausgewählt, die besteht aus:

$-NR^1-$,

worin $R^1$ jeweils Wasserstoff oder einen einwertigen organischen Rest darstellt, welcher auch die Anwesenheit von Silizium zulässt und worin, wenn mehrere Gruppen $R^1$ vorliegen, diese gleich oder verschieden voneinander sein können, einem gesättigten oder ungesättigten, gegebenenfalls mit weiteren Substituenten substituierten diaminofunktionellen Heterocyclus der Formel (IIa)

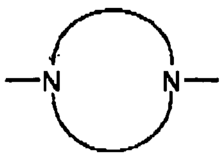

(IIa)

und

einem dreiwertigen Rest der Formel (IIb) :

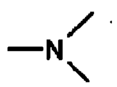

(IIb).

Die Einheiten Q sind nicht mit Carbonylkohlenstoffatomen der V-Einheiten verbunden. Bevorzugt sind die Q-Einheiten sekundäre Aminogruppen, die protoniert vorliegen können. Die Anwesenheit von protonierten Aminogruppen bzw. Ammoniumgruppen ist weniger bevorzugt Die erfindungsgemäßen Verbindungen weisen bevorzugt mindestens zwei, bevorzugter mindestens vier noch bevorzugter mindestens sechs Aminogruppen auf.

Die Einheit V wird ausgewählt aus mindestens einem mehrwertigen, geradkettigen, cyclischen oder verzweigten, gesättigten, ungesättigten oder aromatischen Kohlenwasserstoffrest mit bis zu 1000 Kohlenstoffatomen (wobei die Kohlenstoffatome des gegebenenfalls vorhandenen Polyorganosiloxanrestes nicht mitgezählt werden), der gegebenenfalls eine oder mehrere Gruppen, ausgewählt aus

-O-,
-C(O)-,
-C(S)-,
$-NR^2-$,

worin $R^2$ Wasserstoff, einen einwertigen, geradkettigen, cyclischen oder verzweigten, gesättigten, ungesättigten oder aromatischen Kohlenwasserstoffrest mit bis zu 300 Kohlenstoffatomen darstellt, der eine oder mehrere Gruppen ausgewählt aus -O-, -NH-, -C(O)- und -C(S)- enthalten kann, und der gegebenenfalls durch eine oder mehrere Substituenten, ausgewählt aus der Gruppe, die besteht aus einer Hydroxylgruppe, einer gegebenenfalls substituierten, bevorzugt ein oder mehrere Stickstoffatome enthaltenden heterocyclischen Gruppe, Polyalkylenoxidresten, Polyalkylenoxidesterresten, Polyorganosiloxanylresten und $-Si(OR)_{3-a}(R')_a$, worin a, R und R' wie oben definiert sind, wobei wenn mehrere Gruppen $-NR^2-$ vorliegen, diese gleich oder verschieden sein können, und mit der Maßgabe, dass die Gruppe $-NR^2-$ an ein Carbonyl- und/oder Thiocarbonylkohlenstoffatom bindet, und mehrwertigen Polyorganosiloxanresten enthalten kann, und der gegebenenfalls durch eine oder mehrere Hydroxylgruppen und/oder Gruppen der Formel (I)

$$-Si(OR)_{3-a}(R')_a$$

worin 'a', R und R' wie oben definiert sind, substituiert sein kann,
mit der Maßgabe, das mindestens ein Rest V mindestens einen Polyorganosiloxanrest enthält und mindestens ein Rest V mindestens eine Polyalkylenoygruppe enthält,
und worin die terminale Absättigung der miteinander verbundenen mehrwertigen Gruppen Q und V über einwertige organische Reste, Wasserstoff und/oder Hydroxy erfolgt.
Die Gruppe V kann die Einheiten der nachstehend definierten Einheiten U enthalten.

Die Nennung der Gruppe der Formel (I) sowohl als Substituent der Gruppe $R^2$ als auch der Gruppe V bedeutet, dass die genannte Gruppe sowohl Bestandteil einer terminalen Gruppe $R^2$ über Amidstickstoff mit der Hauptkette verbunden ist als auch über eine aliphatische Gruppe über ein Kohlenstoffatom mit der Hauptkette in den Gruppen V oder Q verbunden sein kann.

In den genannten Einheiten V ist der genannte Polyorganosiloxanrest zweckmäßig eine zweiwertige Gruppe der Formel (III):

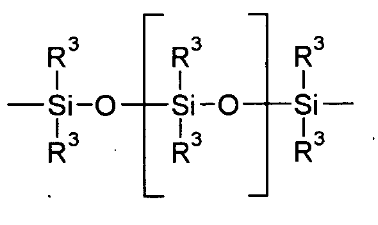

bedeutet. Die erfindungsgemäß verwendeten Amino-Polyorganosiloxan-Ausgangsverbindungen und Salze davon, enthalten zweckmäßig durchschnittlich mindestens einen, bevorzugt mindestens zwei, noch bevorzugter mehr als drei der genannten Einheiten V, die einen Polyorganosiloxanrest der Formel (III) enthalten.

Besonders bevorzugt enthalten die erfindungsgemäß verwendeten Amino-Polysiloxan-Ausgangsverbindungen mindestens drei Einheiten V, die einen Polyorganosiloxanrest der Formel (III) aufweisen. Diese Verbindungen

weisen demzufolge mindestens zwei Gruppen Z auf , die zwischen den Einheiten V liegen.

"n" in dem Polyorganosiloxanrest der Formel (III) ist 0 bis 1000, bevorzugt 20 bis 200. Die Polyorganosiloxanrcstc in den Einheiten V können gleich oder verschieden von-einander sein.

Bei den erfindungsgemäß verwendeten, noch nicht vernetzten Amino-Polyorganosiloxan-Ausgangsverbindungen und Salzen davon, kann es sich bevorzugt um Polyamino-Polyorganosiloxan-Verbindungen handeln. Die Polyamino-Polyorganosiloxan-Verbindungen sind zweckmäßig Copolymer-Verbindungen, die in der Polymerhauptkette mindestes zwei Amino-Wiederholungseinheiten und mindestens eine, bevorzugt mindestens zwei Polyorganosiloxangruppen-enthaltende Wiederholungseinheiten aufweisen. Die Amino-Einheiten enthalten zweckmäßig sekundäre und/oder tertiäre Stickstoffatome (2 oder 3 organische Reste am neutralen Stickstoffatom), die protoniert sein können. Als Amino-Wiedmholungseinheiten können auch über zwei Stickstoffatome in die Polymerkette eingebundene heterocyclische Reste dienen.

Bevorzugt handelt es bei den Ausgangsverbindungen um lineare Polyamino-Polyorganosiloxan-Verbindungen mit $\alpha,\omega$-gebunden siloxanhaltigen Grupen V um Polymere mit den Einheiten:

(-Aminorest Q-PolyorganosHoxan-haltiger Rest V-)$_x$

worin x > 2, bevorzugt > 3 ist, und entweder die Reste $R^1$ in Q oder bevorzugter die Reste V Träger der wesentlichen Gruppen der Formel (I) und des Polyoxynlkylcn-rcstcs sind.

Die Reste V können auch verzweigende drei- oder höherwertige Polyorganosiloxaneinheiten aufweisen.

Die erfindungsgemäß verwendeten Polyamino-Polyorganosiloxan-Ausgangsverbindungen werden bevorzugt durch monofunktionelle Gruppen Wasserstoff oder -V-$R^4$ als Endgruppe terminiert, worin $R^4$ einen einwertigen organischen Rest, bevorzugt Wasserstoff oder Hydroxyl darstellt.

Die Eigenschaften der erfindungsgemäßen vernetzten Verbindungen lassen sich insbesondere durch Wahl der Wiederholungseinheiten V in den Amino-Polyorganosiloxan-Ausgangsverbindungen steuern. Prinzipiell kann man sowohl das Molekulargewicht bzw, die Kettenlänge als auch den Gewichtsanteil der die Löslichkeit bestimmenden Wiederholungseinheiten V variieren. Dabei kann man zwischen den folgenden Wiederholungseinheiten V unterscheiden:

a) Polyalkylenoxid-Gruppen enthaltende Wiederholungseinheiten $V_{PAO}$, die hydrophilierend wirken, d.h. die Löslichkeit in Wasser oder polaren Lösungsmitteln erhöhen,

b) Polyorganosiloxan-Gruppen enthaltende Wiederholungseinheiten $V_{si}$, die hydrophobierend wirken, d.h. die Lipophilie erhöhen, und die Gasdurchlässigkeit der vernetzten Verbindungen erhöhen,

c) Wiederholungseinheiten, die weder eine Polyalkylenoxid noch eine Polyorganosiloxangruppe enthalten, wie beispielsweise Polyalkylengruppen, die ebenfalls hydrophobierend wirken, kurzkettige durch Epoxidöffnung erhaltene Hydroxygruppen aufweisende Polyalkylenreste, die eher hydrophilierend wirken, $V_0$.

In einer bevorzugten Ausführungsform werden die vernetzten Verbindungen nur aus den Wiederholungseinheiten $V_{PAO}$ und $V_{Si}$ mit den Einheiten Q gebildet.

In einer bevorzugten Ausführungsform der erfindungsgemäßen vernetzten Verbindungen stellt $V_{Si}$ eine Gruppe der Formel

-V*-Z-V*-

dar, worin Z ein Polyorganosiloxanrest der Formel (III), wie oben definiert ist, und V* einen zweiwertigen geradkettigen, cyclischen oder verzweigten, gesättigten, ungesättigten oder aromatischen Kohlenwasserstoffrest mit bis zu 40 Kohlenstoffatomen darstellt, der gegebenenfalls eine oder mehrere Gruppen, ausgewählt aus -O-, - CONH-, -CONR$^2$-, worin $R^2$ wie oben definiert ist, , -C(O)- und -C(S)- ent halten kann, und der Rest V* gegebenenfalls durch eine oder mehrere Hydroxygruppen substituiert sein kann.

In der vorstehend erwähnten Ausführungsform kann das erfindungsgemäße lineare Polyorganosiloxancopolymer die folgenden Wiederholungseinheiten aufweisen:

-[V*-Z-V*-Q]- bevorzugt zusammen mit -[$V_{PAO}$-Q]-.

Besonders bevorzugt steht

V* für einen zweiwertigen geradkettigen, cyclischen oder verzweigte, gesättigten, ungesättigten oder aromatischen Kohlenwasserstoffrest mit bis zu 16 Kohlenstoffatomen, der eine oder mehrere Gruppen, ausgewählt aus -O-,-CONH-, -CONR$^2$-, worin $R^2$ wie oben definiert ist, -C(O)-, -C(S)- enthalten kann und mit einer oder mehreren Hydroxylgruppen substituiert sein kann. Noch bevorzugter wird -V*- ausgewählt aus Gruppen der Formeln:

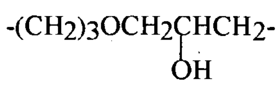

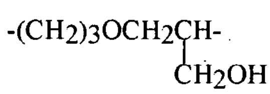

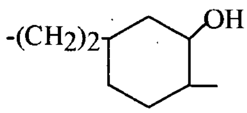

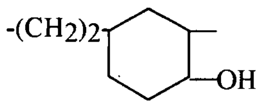

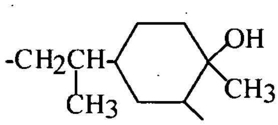

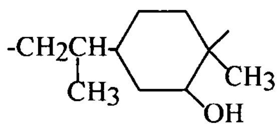

$-(CH_2)_2-$, $-(CH_2)_3-$, $-(CH_2)_4-$, $-(CH_2)_5-$, $-(CH_2)_6-$,
$-CH=CHCH_2-$, $-CH=CHCH_2CH_2-$,
$-CH_2CH_2CH_2OC(O)CH_2-$, $-CH_2CH_2CH_2OC(O)CH_2CH_2-$,
$-CH=CHCH_2OC(O)CH_2-$, $-CH=CHCH_2OC(O)CH_2CH_2-$

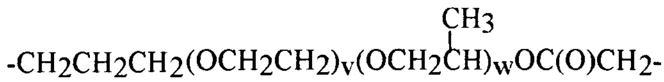

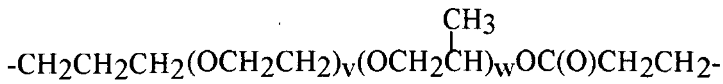

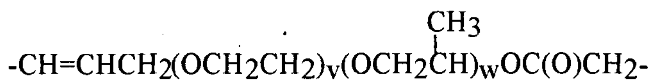

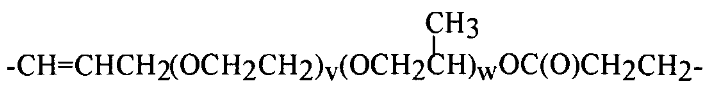

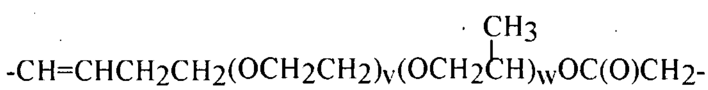

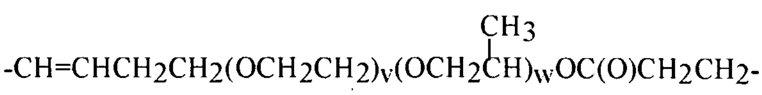

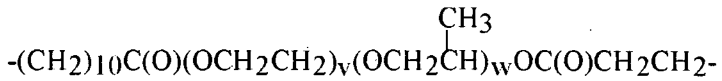

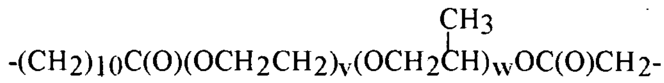

mit $v+w \geq 0$,
$-(CH_2)_3$, $-(CH_2)_4$, $-(CH_2)_5$, $-(CH_2)_6$,
$-CH{=}CHCH_2-$, $CH{=}CHCH_2CH_2-$,
$-CH_2CH_2CH_2OC(O)CH_2$, $-CH_2CH_2CH_2OC(O)CH_2CH_2-$,
$R^2$ steht bevorzugt für: H,
$-CH_3$, $-CH_2CH_3-$, $-(CH_2)_2CH_3$, $-(CH_2)_3CH_3$, $-(CH_2)_5CH_3$, $-(CH_2)_2OH$,

- $-R^9-$, worin $R^9$ einen zweiwertigen, gesättigten oder einfach oder mehrfach ungesättigten, geradkettigen oder verzweigten Kohlenwasserstoffrest mit zwei bis 25 Kohlenstoffatomen darstellt,
- $-(CH_2)_uC(O)O-R^9-O-C(O)(CH_2)_u-$, worin $R^9$ wie zuvor definiert ist,
- $-(CH_2)_u-R^{10}-(CH_2)_u-$, worin $R^{10}$ eine aromatische Gruppe ist,
- $-CH_2CH(OH)CH_2-$,
- $-CH_2CH(OH)(CH_2)_2CH(OH)CH_2-$,
- $-CH_2CH(OH)CH_2OCH_2CH(OH)CH_2OCH_2CH(OH)CH_2-$ und worin

u von 1 bis 3 ist,

Bevorzugte Reste VPAO schließen beispielweise die oben bereits genannten Reste der folgenden Formeln ein: difunktionelle statistische oder blockartige Ethylenoxid/Propylenoxid Copolymereinheiten der Struktur

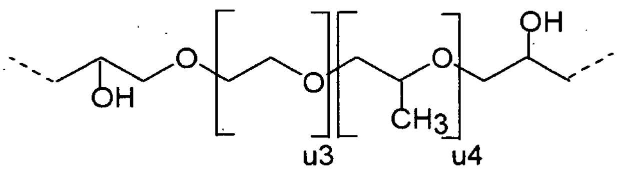

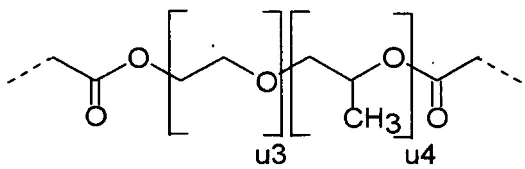

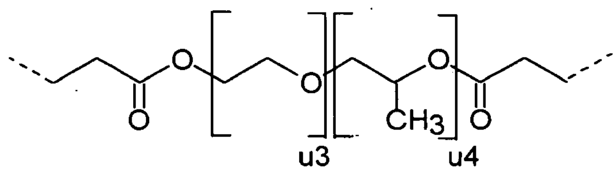

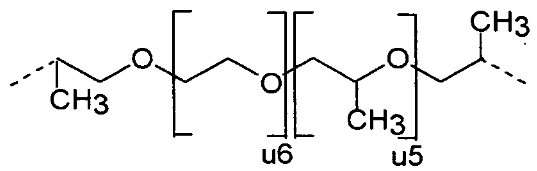

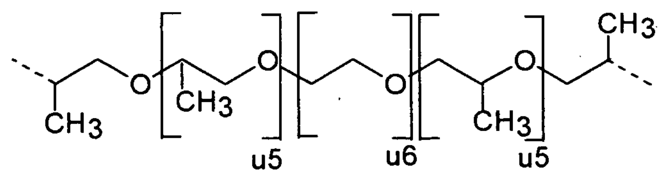

mit
u3= 0 bis 100,
u4= 0 bis 100,
u3= + u4 ≥ 1,
u5= 1 bis 100 und
u6= 1 bis 100.

Die erfindungsgemäßen Amino-Polyorganosiloxan-Verbindung lassen sich bevorzugt durch die Umsetzung von Mono- und/oder Diaminen mit einer zur Reaktion mit den 17

Aminofunktionen befähigten bevorzugt difunktionellen organischen Verbindungen hergestellt.

Das molare Verhälnis der Aminofunktionen und der zur Reaktion mit Aminofunktionen befähigten funktionellen Gruppen beträgt im allgemeinen etwa 1:1, wobei zu berücksichtigen ist, dass primäre Amino-Funktionen zweimal reagieren können. Die Einführung der Reste $V_0$ erfolgt beispielsweise durch Verwendung vorgebildeter Diamine, die beispielsweise Polyalkylenreste enthalten, wie z.B. Hexamethylendiamin, womit gleichzeitig zwei Q-Gruppen eingeführt werden- Weiterhin gelingt die Einführung der Reste $V_0$ durch die Verwendung difunktioneller aminoreaktiver Verbindungen, wie beispielsweise Diepoxide, Dihalogen-Verbindungen, gemischte Epoxid-Halogen-Verbindungen, wie Epichlorhydrin etc.

Durch geeignete Auswahl von Verbindungen sowie deren stöchiometrische Verhältnisse gelingt Steuerung der Löslichkeitsparameter und auch die Aufnahmefähigkeit für die funktionalen Bestandteile in den erfindungsgemäßen Zusammensetzungen, wie weiter unten beschrieben.

Die Aminogruppen der erfindungsgemäßen vernetzten Amino-Polyorganosiloxan-Verbin-dungen können protoniert sein. Geeignete Brönstedt-Säuren sind anorganische und organische Säuren, wie Salzsäure, Schwefelsäure, Phosphorsäure, Carbonäuren, wie Essigsäure, Propionsäure, langkettige Fettsäure, wie Dodecansäure, Dekansäure etc.

Die Einführung der Gruppe der Formel (I) in die erfindungsgemäßen vernetzten Amino-Polyorganosiloxan-Verbindungen kann auf mehreren Wegen erfolgen.

Geeignete Startmaterialien sind reaktiv funktionalisierte Silane, die vorzugsweise Epoxidgruppen, speziell Glycidyl- und Cyclohexylepoxygruppen, Halogenalkylgruppen, speziell Chlorpropylgruppen, Halogencarbonsäureestergruppen, speziell Chloressigsäureestergruppen und Isocyanatogruppen, speziell Isocyanatopropylgruppen, enthalten.

Beispiele sind

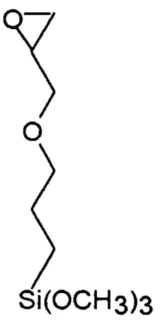
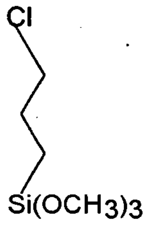
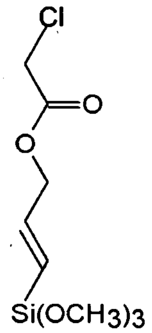
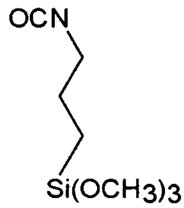

Weitere geeignete Startmaterialien sind aminofunktionelle Silane. Diese verfügen vorzugsweise über primäre und/oder sekundäre Aminogruppen.

Beispiele bevorzugter Materialien sind:

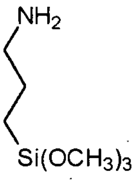
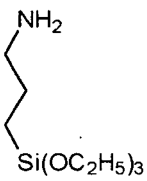
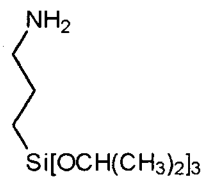
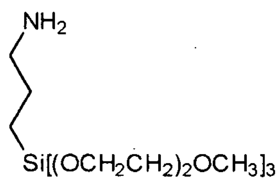

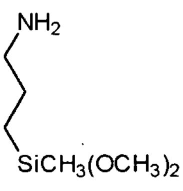
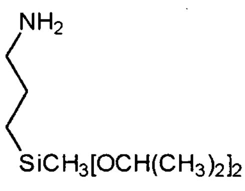
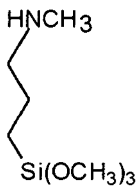
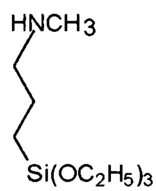
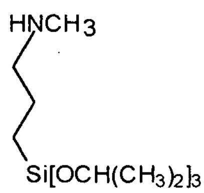

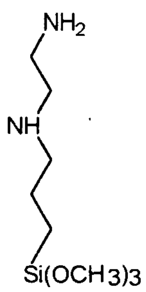
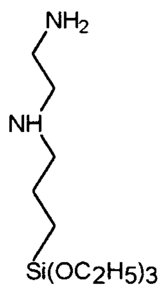
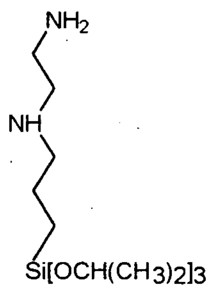
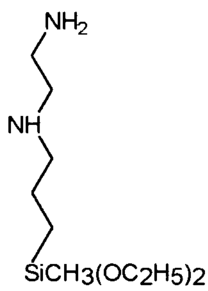
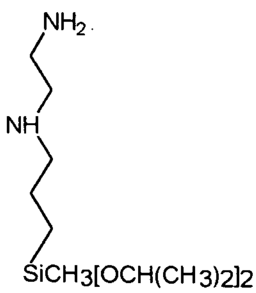

Die Struktur der Aminogruppe entscheidet über die Art der Anbindung an das Polymermolekül, während über das Substitutionsmuster am Siliciumatom die Geschwindigkeit der Hydrolyse in wässriger Umgebung und die finale Netzwerkdichte gesteuert werden können. Generell führen sperrigere Alkoxysubstituenten zu einer Verlangsamung der Hydrolyse in wässriger Umgebung. Der partielle Ersatz von reaktiven Gruppen am Silicium wie die Einführung nicht-hydrolysierbarer Alkylsubstituenten reduziert die Netzwerkdichte der vernetzten Ausgangsverbindungen.

Aminosilane der dargestellten Typen sind entweder kommerziell verfügbar (GE-OSi Silane, Dynasilane® Degussa) oder können z.B. durch basisch katalysierten Austausch von Alkoxygruppen am Siliciumatom in die gewünschten Materialien überführt werden.

Die Polymerbildungsreaktionen werden bevorzugt in Wasser, polaren organischen Lösungsmitteln oder Mischungen beider genannter Komponenten ausgeführt. Geeignet sind z.B. Alkohole, speziell Methanol, Ethanol, i-Propanol und n-Butanol, Glykole, wie Ethylenglykol, Diethylenglykol, Triethylenglykol, die Methyl-, Ethyl- und Butylether der genannten Glykole, 1,2-Propylenglykol und 1,3-Propylenglykol, Ketone, wie Aceton und Methylelhylketon, Ester, wie Ethylacetat, Butylacetat und 2-Ethylhexylacetat, Ether, wie Tetrahydrofuran und Nitroverbindungen, wie Nitromethan. Die Wahl des Lösungsmittels richtet sich wesentlich nach der Löslichkeit der Reaktionspartner, der angestrebten Reaktionstemperatur und einer gegebenfalls vorhandenen, die Umsetzung störenden Reaktivität.

Die Reaktionen werden im Bereich von 20 °C bis 130 °C, vorzugsweise 40 °C bis 100 °C ausgeführt.

Eine Begrenzung des Molekulargewichtes wird beispielsweise durch die sich bei der Reaktion zwischen Epoxiden und im Reaktionssystem gegebenenfalls vorhandenem Wasser bzw. Alkohol ergebende Endstoppung oder alternativ durch die zusätzliche Verwendung von tertiären Aminen, wie Trialkylaminen, oder die Zugabe monofunktioneller gegenüber Aminogruppen reaktiver Verbindungen bewirkt. Dies bedeutet, daß die Polyorganosiloxanpolymere neben den naturgemäß aus der Umsetzung der monomeren Ausgangsmaterialien resultierenden terminalen Gruppen auch solche aus monofunktionellen Kettenabbruchsmitteln, wie Trialkylaminen etc. und z.B. daraus resultierende Ammonium-, Amino-, Ether- oder Hydroxy-Endgruppen aufweisen.

Bevorzugte erfindungsgemäße Verbindungen werden beispielsweise aus Amino-Polyorganosiloxan-Ausgangsverbindungen erhalten, deren Wiederholungseinheiten aus fol-genden Gruppen aufgewählt werden:

a1) $V_{Si}$-entsprechende Wiederholungseinheit:

-[V*-Z-V*]-;

a2) Formel (I)-umfassende Q-Einheit:

- $N(-W-Si(OR)_{3-a}(R')_a)$-, worin R, R' und 'a' wie oben definiert sind und W einen zweiwertigen, geradkettigen, cyclischen oder verzweigten, gesättigten, ungesättigten oder aromatischen Kohlenwasserstoffrest mit bis zu 100 Kohlenstoffatomen darstellt, der eine oder mehrere Gruppen -C(O)-, -O-, -NH-, -S- enthalten kann, und gegebenenfalls durch Hydroxygruppen substituiert sein kann,

a3) Q-$V_{PAO}$-Q-entsprechende Einheiten, die über die Verwendung von Jeffaminen eingeführt werden,

a4) Polyalkylenoxy-Gruppe-enthaltende Q-Einheit der Formel
-N($V_{PAO}$*)-, worin $V_{PAO}$* eine einseitig terminierte $V_{PAO}$-Einheit ist, die beispielsweise durch primäre Amine der Jeffamine M-Reihe eingeführt werden können,

a5) $V_{PAO}$-Einheiten, die beispielsweise über Dihalogen- oder Diepoxypolyoxyalkylen-Verbindungen, wie beispielsweise Dihalogenpolyoxyalkylen-Verbindungen des Typs DER der Firma DOW Chemical,

a6) $V_0$-Einheiten, die beispielsweise über Polyalkylendiamine oder difunktionelle Alkylenverbindungen, die gegenüber Aminen reaktive Gruppen aufweisen, wobei die Polyalkylenreste gegebenenfalls Sauerstoff als Ether- oder Hydroxy enthalten können.

Besonders bevorzugte Amino-Polyorganosiloxan-Ausgangsverbindungen enthalten bei-spielsweise nur die Wiederholungseinheiten a1), a2) und a3). Diese Wiederholungseinheiten a1), a2) und a3) bilden im allgemeinen auch die Hauptkomponenten der Amino-Polyorganosiloaan-Ausgangsverbindungen, d.h. ihr molarer Anteil liegt bevorzugt bei 50 % bis 100 %, bevorzugt 70 % bis 100 % bezogen auf die Gesamtzahl der Q- und V-Einheiten. Bevorzugt ist das molare Verhältnis der Summe der Hauptkomponenten a1), a2) und a3) zu der Summe der Nebenkomponenten a4), a5) und a6) > 3, bevorzugt > 5, noch bevorzugter > 10, noch bevorzugter > 30.

Die molaren Verhältnisse der Wiederholungseinheiten a1) bis a5) sind dabei etwa wie folgt:

$$\Sigma\ a1) + a5) + a6) : 1 - 50\ \text{mol-\%}$$

$$\Sigma\ a2) + a3) + a4) + a6) : 1 - 50\ \text{mol-\%},$$

wobei a1) und a2) > 0 mol-% sind, mindestens a3), a4) oder a5) vorliegen muss und die Summe der Q- und V-Einheiten 100 mol-% ist.

Die Anordung der verschiedenen Q- und V-Einheiten a1) bis a6) kann statistisch oder blockartig sein. Die blockartigen Sequenzen können beispielsweise durch die unterschiedlichen Reaktivitäten der Ausgangsverbindungen realisiert werden. Die blockartigen Sequenzen können auch durch nacheinander durchgeführte Reaktionen der Ausgangsverbindungen unter Bildung von Präpolymeren realisiert werden. Statistische Anordnungen können beispielsweise durch Verwendung ähnlich reaktiver Ausgangsverbindungen realisiert werden.

Weitere Wiederholungseinheiten, die zusätzlich zu den obigen vorliegen oder diese ersetzen können sind beispielsweise:

A7): Q-Einheiten, die "einfache" Alkylsubstituenten entsprechend $R^1$ trag en, die durch Verwendung von primären Monoaminen, wie n-Octylamin, n-Dodecylamin etc. eingeführt werden.

Terminale Gruppen der vorstehend genannten Polyamino-Polyorganosiloxan-Verbindungen werden vorzugsweise durch sekundäre Amine eingeführt, die neben den "einfachen" Alkylsubstituenten entsprechend $R^1$, ihrerseits Reste der Formel (I) oder Poly-alkylenoxy-Gruppen tragen können.

Die vernetzten erfindungsgemäßen Amino-Polyorganosiloxan-Verbindungen eignen sich insbesondere zur Ausrüstung oder Behandlung von natürlichen oder synthetischen Fasern oder faserartigen Substraten, zur kosmetischen Anwendung (Matrixmaterial für kosmetische Wirkstoffe oder als Feuchtigkeitsspender oder als Feuchtig-keitsabsorber), als Adsorptionsmaterial. Aufgrund ihrer hervorragenden Benetzbarkeit und ihrer Fähigkeit Wasser aufzunehmen, eignen sich die vernetzten erfin-dungsgemäßen Amino-Polyorganosiloxan-Verbindungen zur Beschichtung von thermo-plastischen Polymeroberflächen zur Unterdrückung der Wassertropfen- oder Nebel-bildung auf diesen Oberfächen (Antifoggingausrüstung).

Insbesondere eignen sich die vernetzten erfindungsgemäßen Amino-Polyorganosiloxan-verbindungen als Träger- bzw. Matrixmaterial für weitere funktionale Bestandteile. Funktionaler Bestandteil im Sinne der Erfindung schließt im Prinzip jede von der Matrix der vernetzten erfindungsgemäßen Amino-Polyorganosiloxan-Verbindungen ver-schiedene Verbindung ein, die von der Matrix aufgenommen werden kann. Es kann sich dabei beispielsweise auch lediglich um ein Quellmittel handeln, dass in das Netzwerk eintritt bzw. darin gelöst wird und dessen Volumen vergrößert. Das Quellmittel kann darüber hinaus auch die Transportfunktion für darin gelöste weitere funktionale Bestandteile übernehmen. Es dient dann dazu diese weiteren funktionalen Bestandteile in die Matrix hinein oder aus ihr heraus zu transportieren. Es kann gegebenenfalls nach Erfüllung der Transportfunktion wieder entfernt werden, wobei eine poröse, einen funktionalen Bestandteil enthaltende Amino-Polyorganosiloxanmatrix entsteht, die gegebenenfalls mit weiteren funktionalen Bestandteilen beladen, oder auch gequollen oder umgesetzt werden kann (beispielsweise durch Umsetzung von eingelagerten Funktionsmolekülen mit einem Wasserstoff-, Sauerstoff-, Kohlendioxid-, Kohlenmonoxid oder Luftstrom oder aber mit Kohlenwasserstoffen und deren Derivaten, z.B. Limonen, Siliconölen, beispielsweise Si-Vinyl bzw. SiH-funktionellen Ölen). Die Eignung der erfindungsgemäßen vernetzten Amino-Polyorganosiloxan-Verbindungen als Matrix bzw. Träger für funktionale Bestandteile ergibt sich aus den außerordentlichen Eigenschaften der erfindungsgemäßen vernetzten Amino-Polyorganosiloxan-Verbindungen. Die vernetzten Amino-Polyorganosiloxan-Verbindungen sind nämlich einerseits aufgrund ihrer vernetzten Struktur in Lösungsmitteln unlöslich, andererseits verfügen sie über eine ungewöhnlich hohe Quellbarkeit, d.h., sie vermögen im Verhältnis zu ihrem Eigengewicht große Mengen Quellmittel aufzunehmen, ohne sich darin zu lösen. Es kommt somit zur Bildung eines gequollenen Gels bzw. Netzwerks. Dabei vermögen die erfindungsgemäßen ver-netzten Amino-Polyorganosiloxan-Verbindungen überraschend sowohl polare als auch unpolare funktionale Bestandteile aufzunehmen. Die Menge des Quellmittels, die von den erfindungsgemäßen vernetzten Amino-Polyorganosiloxan-Verbindungen aufgenommen werden kann, beträgt von mindestens etwa 10 bis 300 Gew.-%, bezogen auf das Gewicht der vernetzten Amino-Polyorganosiloxan- Verbindungen. Die erfindungsgemäßen vernetzten Amino-Polyorganosiloxan-Verbindungen können auch in der Matrix unlösliche flüssige oder feste funktionale Bestandteile aufnehmen. Diese werden auf unter-schiedliche Arten in die Matrix eingebracht, wie weiter unten noch ausführlich beschrieben. Die Menge der unlöslichen flüssigen oder festen funktionalen Bestandteile in der Matrix kann beispielsweise bis zu 70 Gew.-% bezogen auf die Masse der erfindungsgemäßen vernetzten Amino-Polyorganosiloxan-Verbindungen betragen. Bei den erfindungsgemäßen vernetzten Amino-Polyorganosiloxan-Verbindungen ist es sehr ungewöhnlich, dass sowohl polare als auch unpolare Fremdmaterialien von der Matrix aufgenommen werden können.

Gegenstand der Erfindung sind daher auch Zusammensetzungen, die die erfindungsgemäßen Amino-Polyorganosiloxan-Verbindungen sowie mindestens einen weiteren funktionalen Bestandteil enthalten.

Der funktionale Bestandteil kann aus gasförmigen, flüssigen oder festen, organischen oder anorganischen Phasen ausgewählt werden. Funktionale Bestandteile werden beispielsweise aus der Gruppe ausgewählt, die besteht aus:

Polaren oder unpolaren Quellmitteln, wie Wasser, polare oder unpolare organische oder anorganische Lösungsmittel, Silikate, anorganische oder organische Ionenaustauschern, Duftstoffe, Parfums, Duftöle, kosmetische Wirkstoffe, pharmazeutische Wirkstoffe, Agrochemikalien, wie Pflanzenschutzmittel, wie Herbizide, Insektizide, Wirts- oder Käfig-Verbindungen, Adsorptionsmittel, Katalysatoren, Nährstofflösungen, wie flüssige Pflanzendünger, Nährböden für Bakterienkulturen und für die Reaktion mit Gasen oder Flüssigkeiten bestimmte Chemikalien, wie Oxidationsmittel.

Die Erfindung betrifft weiterhin ein Verfahren zur Herstellung der erfindungsgemäßen Zusammensetzungen, das umfasst:

- Vermischten der Amino-Polyorganosiloxanausgangsverbindungen mit mindestens einem funktionalen Bestandteil und anschließende Vernetzung in Gegenwart von Wasser, oder
- Quellen der vernetzten Amino-Polyorganosiloxan-Verbindungen mit mindestens einem flüssigen funktionalen Bestandteil oder einer Lösung oder Dispersion mindestens eines funktionalen Bestandteils und gegebenenfalls Entfernen des Lösungs- oder Dispergiermittels.

Bei der ersten Alternative kann beispielsweise ein Adsorptionsmittel oder eine Katalysator oder eine Ionenaustauscher in den unvernetzten Ausgangsverbindungen dispergiert werden, und anschließend werden die unvernetzten Ausgangsverbindungen in Gegenwart von Wasser vernetzt und dabei die funktionalen Bestandteile im wesentlichen irreversibel in der Matrix eingeschlossen.

Bei der zweiten Alternative werden ein oder mehrere funktionale Bestandteile in einem Lösungs- bzw. Dispergiermittel, das in der bereits vernetzten Matrix löslich ist, gelöst bzw. dispergiert und die Lösung bzw. Dispersion wird anschließend mit der vernetzten Matrix in Kontakt gebracht. Anschließend kann das Lösungs- bzw. Dispergiermittel aus der gequollenen Matrix wieder entfernt oder ausgetauscht werden.

Je nach Art des verwendeten funktionalen Bestandteils sind verschiedene Anwendungen der erfindungsgemäßen Zusammensetzungen möglich.

So können beispielsweise Wirts-Verbindungen, wie z.B. Cyclodextrine ,in die Matrix eingebracht werden und die mit den Wirtsverbindungen beladenen vernetzten Amino-Polyorganosiloxan-Verbindungen auf natürliche oder synthetische Fasern aufgebracht werden. Die vernetzte Matrix besitzt eine hohe Affinität zu den Fasern und vermittelt somit die Haftung zwischen den Wirtsmolekülen und den Fasern. Weiterhin verfügt die Matrix über eine Durchlässigkeit für Gase, so dass diese durch die Matrix zu den Wirtsmolekülen gelangen können und dort eingeschlossen werden können. Dies eröffnet die Möglichkeit, funktionelle Textilien und Gewebe in einfacher Weise herzustellen. Weiterhin können beliebige andere funktionelle Bestandteile, die die Fasern bzw. faserartigen Substrate in ihren funktionellen Eigenschaften verbessern, in die Matrix eingebracht werden. Weiterhin können zur kosmetischen Anwendung beispielsweise feuchtigkeitsregulierende Bestandteile für die Haut, wie Wasser, Alkohole oder Polyole, wie Glycerin, Stimulanzien, Antioxidantionsmittel, Vitamine, in die Matrix eingebracht werden, die dabei beispielsweise die Funktion eines an der Haut haftenden Depots erfüllt. Weiterhin können beispielsweise Ionenaustauscher oder anorganische Verbindungen in die Matrix eingebracht werden und die resultierende Zusammensetzung als Adsorptionsmaterial, wie für Gase, als Flockungshilfsmittel oder Builder in Reinigungsfomiulierungen verwendet werden. Weiterhin können beispielsweise Insektizide, Biozide oder Pflanzenschutzmittel in die Matrix eingebracht werden und die resultierenden Zusammensetzungen auf die zu behandelnden Tiere oder Pflanzen aufgetragen werden. Die an der Pflanze haftende Matrix entlässt dann allmählich die Pflanzenschutzmittel, die sonst mehrfach aufgetragen werden müssten, da sie bei Regen von den Pflanzen abgespült werden. Die Matrix selbst löst sich zu einem späteren Zeitpunkt von der Pflanze ebenfalls ab bzw. zerfällt unter Witterungsbedingungen.

Quell- bzw. Dispergiermittel, die erfindungsgemäß verwendet werden können, schließen neben Wasser polare organische Lösungsmittel ein, wie Alkohole, wie Methanol, Ethanol, 2-Propanol und n-Butanol, Glycole, wie Ethylenglycol, Diethylenglycol, Triethylenglycol, 1,2-Propylenglycol, Dipropylenglycol, Tripropylenglycol und 1,3-Propylenglycol, die Methyl-, Ethyl- und Butylether der Glycole, Ketone, wie Aceton und Methylethylketon, Ester, wie Ethylacetat, Butylacetat und 2-Ethyl-hexylacetat, Methoxypropylacetat, Ether, wie Tetrahydrofuran und Nitroverbindungen, wie Nitromethan.

Funktionale Bestandteile, die in die vernetzte Matrix eingeführt werden können, schließen neben den oben genannten beispielsweise ein: Salze und Säuren, die zumindest partiell in Wasser löslich sind, z.B. NaCl, Cobaltsalze, Nickelsalze, Manganverbindungen, Kupfersalze, wie CuCl, $CuCl_2$, sonstige Elektrolytsalze, wie Ammoniumchlorid, Lithiumperchlorat, Edelmetallverbindungen, wie Salze von Silber, wie $AgNO_3$, Gold und Platinverbindungen, wie $H_2PtCl_6$, Salze von Rhodium, Ruthenium, Iridium vorzugsweise für katalytische Prozesse.

Darüber hinaus können Oxidationsmittel, die als Geruchstilger oder Sauerstoffträger nutzbar sind, in die Matrix eingearbeitet werden. Diese Oxidationsmittel können beispielsweise aus gewählt werden aus der Gruppe der Peroxide, Superoxide, Chlorate, Chlorite, Bromate, Iodat und Permanganat.

Weitere bevorzugte funktionale Bestandteile schließen Silicate, beispielsweise natürliche Bentonite oder synthetische Laponite, Silicagele, disperse Aluminiumoxide /hydroxide, Zirconiumoxide/hydroxide ein. Solche erfindungsgemäßen Zusammensetzungen finden beispielsweise Anwendung als Adsorptionsmittel, z.B. im Kosmetik- oder Textilausrüstungbereich.

Weitere bevorzugte funktionale Bestandteile schließen organische funktionale Bestandteile ein, die hinreichend wasserlöslich bzw. dispergierbar sind, wie Hydroxylverbindungen, speziell Polyhydroxyverbindungen, wie Sacchariden, wie Sorbitol, Glucose, N-Methylglucamin, Gluconsäure, Gluconsäurelacton, Guar Gum, kationisches Guar Gum, Carboxymethylcellulose, der Aminosäuren, Peptide und Proteine, wie Glycin, Serin, Glutamin, Tyrosin, Cystein, Lysin, Asparaginsäure, und DANN, hinreichend wasserlösliche bzw. dispergierbare, ungeladene und geladene Polymere, z.B. Polyalkylenoxide, anionische Polymere, wie Polystyrensufonate, Maleinsäurecopolymere, und kationische Polymere, wie Polydiallyldimethyl-ammoniumchlorid -Poly-DADMAC-.

Weitere bevorzugte funktionale Bestandteile schließen beispielsweise polare Systeme, wie Microemulsionen, Emulsionen, stabilisierte Dispersionen und Core-Shell-Materialien ein, die aus einer äußeren polaren Schicht, welche die Anbindung an die Wasserphase gewährleistet, und einer inneren Phase aus unpolareren Materialien bestehen.

## <u>Beispiele</u>

Die nachfolgenden Beispiele sollen die Erfindung näher erläutern, ohne sie jedoch einzuschränken.

Beispiel I

1a) Herstellung eines vernetzungsfähigen Vorproduktes

In einem 250 ml Dreihalskolben werden
26,93 g (44.7 mmol) eines Epoxysiloxans der Struktur

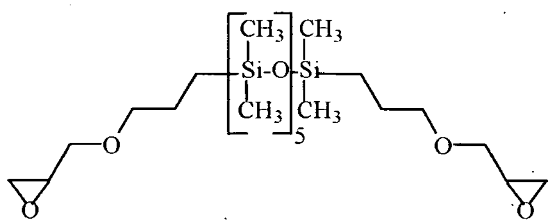

30,34 g (19,3 mmol) eines Epoxysiloxans der Struktur

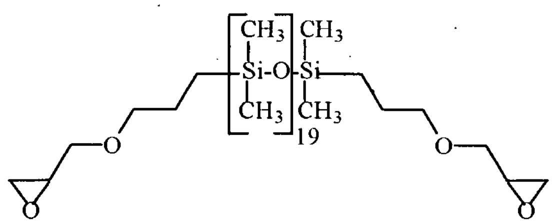

18,99 g (30 mmol) des Aminopolyethers Jeffamin® ED 600 (Huntsman Corp.)
$H_2NCH(CH_3)CH_2[OCH_2CH(CH_3)]_a(OCH_2CH_2)_9\ [OCH_2CH(CH_3)]_b>NH_2$ mit a+b=3.6
6,63 g (30 mmol) 3-Aminopropyltriethoxysilan
in 82,9 g 2-Propanol unter Rührung bei Raumtemperatur gelöst. Die klare Lösung wird für 1 Stunde auf 82-84 °C erhitzt, um dann sofort weiter verarbeitet zu werden. 1b) Herstellung eines Siloxanetzwerkes mit eingelagertem Funktionalmaterial Laponite®RD

In einem 250 ml Vierhalskolben werden 3 g eines des synthetischen Schichtsilikates Laponite®RD (Rockwood Inc.) mit 57 g deionisierten Wassers gemischt und unter Magnetrührung auf 82 °C erhitzt. Es entsteht eine transparente, feste, scherverdünnende Lösung.

In diese Lösung werden bei 82 °C innerhalb 5 Minuten 80 g des Produktes aus Beispiel 1a) eingetropft. Es bildet sich sofort eine trübe, schleimartige Mischung. Die Mischung wird für weitere 20 Minuten bei 82°C gerührt und anschließend während des Erkaltens mit dem Magnetrührer in eine Schraubflasche abgefüllt. Die Magnetrührung wird bei Raumtemperatur fortgesetzt. Nach 24 Stunden hat sich ein vernetztes, elastisches Material gebildet. Zusätzlich sind ca. 20 g einer

Mischung Wasser/2-Propanol aus dem elastomeren Körper ausgeschieden worden. Bei dem vernetzten, elastischen Material handelt es sich durch die Wirkung des Laponit®RD, trotz des sehr hohen Anteils an Wasser/2-Propanol, um einen festen, schneidbaren Formkörper.

1c) Trocknung

Es wird eine 17,71 g schwere Scheibe vom unter 1b) erhaltenen vernetzten, elastischen Material abgeschnitten und 24 Stunden bei Raumtemperatur getrocknet. Das getrocknete Material wiegt noch 7,01 g. Der Flüssigkeitsanteil (Wasser/2-Propanol) am vernetzten, elastischen Material beträgt 60,4 %. Das Gewicht des Trockenrückstandes verändert sich im Verlauf von weiteren 6 Tagen nicht mehr. Das getrocknete Material ist merklich geschrumpft, sichtbar stark porös und brüchig.

1d) Aufnahme flüssiger Substanzen

Vom unter 1c) hergestellten pörösen Trockenmaterial werden Teilstücke abgetrennt und in geschlossenen 10 ml Probenfläschchen 24 Stunden der Einwirkung im Überschuß in nachfolgender Tabelle genannter flüssiger funktionaler Bestandteile ausgesetzt.

| Trockenmaterial 1c Einwaage [g] | Flüssigkeit | Gewicht nach 24 h [g] | Gew % Flüssigkeit im Material | Aussehen |
|---|---|---|---|---|
| 1,67 | $H_2O$ | 2,68 | 37,7 | opaque, elastisch |
| 0,75 | $D_6$* | 1,19 | 36,9 | opaque, elastisch |
| 0,98 | U1** | 1,25 | 21,6 | opaque, elastisch |
| 0,87 | Limonen | 1,94 | 55,1 | fast transparent, elastisch |
| 0,39 | $D_6$+$H_2O$*** | 0,58 | 32,7 | trüb, elastisch |

* Dodecamethylcyclohexasiloxan
** alpha,omega-vinyldimethylsiloxy-terminiertes Polyorganosiloxan der Viskosität 1000 mPa.s (25 °C) (GE Bayer Silicones)
*** Es wurden dem Trockenmaterial 1c) gleichzeitig 0,175g D6 + 0,059 g $H_2O$ angeboten; nach 24 Stunden ist keine Flüssigkeit mehr sichtbar

Die Daten zur Flüssigkeitsaufnahme zeigen, daß die erfindungsgemäßen Materialien in der Lage sind, große Mengen polarer Flüssigkeiten, weitgehend unpolarer Flüssigkeiten und auch Mischungen aus polaren mit unpolaren Flüssigkeiten aufzunehmen.

Beispiel 2

Herstellung eines Siloxannetzwerkes mit eingelagertem funktionalem Bestandteil Glucose

In einem 250 ml Vierhalskolben werden 30 g Glucose mit 30 g deionisierten Wassers gemischt und unter Magnetrührung auf 80 °C erhitzt. Es entsteht eine klare Lösung. In diese Lösung werden bei 80 °C innerhalb 22 Minuten 80 g des Produktes aus Beispiel 1a) eingetropft. Die Mischung wird für weitere 50 Minuten bei 80°C gerührt, wobei die Viskosität bereits merklich steigt. Die Mischung wird anschließend unter Erkalten mit dem Magnetrührer in eine Schraubflasche abgefüllt. Die Magnetrührung wird bei Raumtemperatur fortgesetzt. Nach 72 Stunden hat sich ein transparentes vernetztes, elastisches Material gebildet. Zusätzlich sind ca. 20 g einer Mischung Wasser/2-Propanol und Glucose aus dem elastomeren Körper ausgeschieden worden. Nach ca. 60 Tagen sind aus dieser abgeschiedenen Lösung 8 g Glucose auskristallisiert.

Beispiel 3

Herstellung eines Siloxannetzwerkes mit eingelagertem funktionalem Bestandteil Kupferchlorid/Kupfer

3a) In einem 250 ml Vierhalskolben werden 3 g Kupfer(I)-chlorid mit 57 g deionisierten und mit Stickstoff gespülten Wassers gemischt und unter Magnetrührung auf 80 °C erhitzt. Es entsteht eine leicht grünliche, trübe Dispersion.

In diese Lösung werden bei 80 °C innerhalb 5 Minuten 80 g des Produktes aus Beispiel 1a) eingetropft. Es bildet sich sofort eine gelbe, milchige Dispersion. Die Mischung wird für weitere 50 Minuten bei 80 °C gerührt und

anschließend während des Erkaltens mit dem Magnetrührer in eine mit Stickstoff gespülte Schraubflasche abgefüllt. Die Magnetrührung wird bei Raumtemperatur fortgesetzt. Nach 72 Stunden hat sich ein gelb gefärbtes, vernetztes, elastisches Material gebildet.

3b) Trocknung

Es werden 8,64 g vom vernetzten, elastischen Material 3a) abgetrennt und 15 Stunden bei Raumtemperatur in einem Sticksoffstrom getrocknet. Das getrocknete Material wiegt noch 3,18 g. Der Flüssigkeitsanteil (Wasser/2-Propanol) am vernetzten, elastischen Material beträgt 63,2 %. Das getrocknete Material ist merklich geschrumpft, aber weiterhin elastisch.

3c) Aufnahme eines Siliconöls

Vom unter 3b) hergestellten gelben, elastischen Trockenmaterial werden 0,8 g abgetrennt und unter Stickstoff in 10 g Tetramethyldisiloxan ($M^HM^H$) eingebracht.Nach 24 Stunden Einwirkzeit beträgt das Gewicht des Materials 1,88 g, was einem Flüssigkeitanteil im Material von 57,4 % entspricht. Während der Einwirkung von $M^HM^H$ wird die Entwicklung von Gasblasen beobachtet und parallel nimmt das Volumen stark zu. Das Material hat sich intensiv rotbraun gefärbt, was einen Übergang von Cu(I) zu Cu(0) indiziert.

3d) Behandlung mit Luft

Ein 0,67 g schweres Stück des rotbraun gefärbten Materials gemäß 3c) wird an Luft gelagert. Nach 12 Stunden hat sich das Gewicht auf 0,3 g verringert und das Material eine intensive grüne Farbe angenommen, was-einen Übergang von Cu(0) zu Cu(II) indiziert. Dies zeigt, dass die erfindungsgemäßen Zusammensetzungen eine hohe Gasdurchlässigkeit besitzen, was sie beispielsweise als Träger für Adsorptionsmaterialen und Wirts-Verbindungen, oder Membranmaterial geeignet erscheinen lässt.

## Patentansprüche

**1.** Vernetzte Amino-Polyorganosiloxan-Verbindungen und Salze davon, erhältlich durch kondensierende Vernetzung von Amino-Polyorganosiloxan-Ausgangsverbindungen und Salzen davon in Gegenwart von Wasser, die mindestens eine funktionelle Gruppe der Formel (I):

$$-Si(OR)_{3-a}(R')_a \qquad (I)$$

worin 'a' eine ganze Zahl von 0 bis 2 ist und R und R' gleich oder verschieden voneinander sein können und jeweils einen organischen Rest darstellen, und mindestens eine Polyalkylenoxy-Gruppe aufweisen,
und worin die Amino-Polyorganosiloxan-Ausgangsverbindungen lineare Polyamino-Polyorganosiloxan-Verbindungen mit $\alpha,\omega$-gebunden siloxanhaltigen Gruppen V der Formel

$$-[Q-V]_x-$$

sind, worin x > 2 ist, die Einheit Q aus der Gruppe ausgewählt wird, die besteht aus:

$$-NR^1-,$$

worin $R^1$ jeweils Wasserstoff oder einen einwertigen organischen Rest darstellt, welcher auch die Anwesenheit von Silizium zulässt und worin, wenn mehrere Gruppen $R^1$ vorliegen, diese gleich oder verschieden voneinander sein können,
einem gesättigten oder ungesättigten, gegebenenfalls mit weiteren Substituenten substituierten diaminofunktionellen Heterocyclus der Formel (IIa)

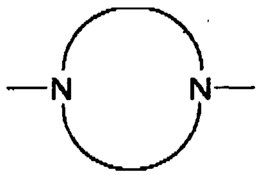

(IIa)

und
einem dreiwertigen Rest der Formel (IIb):

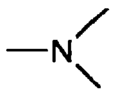

(IIb),

die Einheiten Q nicht über Carbonylkohlenstoffatome an V-Einheiten gebunden sind,
die Einheiten V ausgewählt werden aus mindestens einem mehrwertigen, geradkettigen, cyclischen oder verzweigten, gesättigten, ungesättigten oder aromatischen Kohlenwasserstoffrest mit bis zu 1000 Kohlenstoffatomen, wobei die Kohlenstoffatome des gegebenenfalls vorhandenen Polyorganosiloxanrestes nicht mitgezählt werden, der gegebenenfalls eine oder mehrere Gruppen, ausgewählt aus
-O-,
-C(O)-,
-C(S)-,
$-NR^2-$,
worin $R^2$ Wasserstoff, einen einwertigen, geradkettigen, cyclischen oder verzweigten, gesättigten, ungesättigten oder aromatischen Kohlenwasserstoffrest mit bis zu 300 Kohlenstoffatomen darstellt, der eine oder mehrere Gruppen ausgewählt aus -O-, -NH-, -C(O)- und -C(S)- enthalten kann, und der gegebenenfalls durch eine oder mehrere Substituenten, ausgewählt aus der Gruppe, die besteht aus einer Hydroxylgruppe, einer gegebenenfalls substituierten, bevorzugt ein oder mehrere Stickstoffatome enthaltenden heterocyclischen Gruppe, Polyalkylenoxidresten, Polyalkylenoxidesterresten, Polyorganosiloxanykesten und $-Si(OR)_{3-a}(R')_a$, worin a, R und R' wie oben definiert sind, wobei wenn mehrere Gruppen $-NR^2-$ vorliegen, diese gleich oder verschieden sein können, und mit der Maßgabe, dass die Gruppe $NR^2$- an ein Carbonyl- und/oder Thiocarbonylkohlenstoffatom bindet, und
mehrwertigen Polyorganosiloxanresten enthalten kann, und der gegebenenfalls durch eine oder mehrere Hydroxylgruppen und/oder Gruppen der Formel (I)

$$-Si(OR)_{3-a}(R')a$$

worin 'a', R und R' wie oben definiert sind, substituiert sein kann,
mit der Maßgabe, das mindestens ein Rest V mindestens einen Polyorganosiloxanrest enthält und mindestens ein Rest V mindestens eine Polyalkylenoxygruppe enthält,
und worin die terminale Absättigung der miteinander verbundenen mehrwertigen Gruppen Q und V über einwertige organische Reste, Wasserstoff und/oder Hydroxy erfolgt.

2. Vernetzte Verbindung nach Anspruch 1, worin die Polyalkylenoxy-Gruppe ausgewählt wird aus einwertigen oder zweiwertigen statistischen oder blockartigen Ethylenoxid/Propylenoxid-Copolymereinheiten.

3. Vernetzte Verbindung nach einem der Ansprüche 1, oder 2, worin die Ausgangsverbindung mindestens zwei Einheiten V, die einen Polyorganosiloxanrest enthalten, aufweist.

4. Vernetzte Verbindung nach Anspruch 1, **dadurch gekennzeichnet, dass** sie keine quaternäre Ammoniumgruppe aufweist.

5. Vernetzte Verbindung nach einem der Ansprüche 1 bis 4, **dadurch gekennzeichnet, dass** in der Ausgangsverbindung mindestens eine der Gruppen V und/oder Q eine Gruppe der Formel (I) aufweist,

$$-Si(OR)_{3-a}(R)_a \qquad (I),$$

worin a, R und R' wie oben definiert sind.

**6.** Vernetzte Verbindung nach einem der Ansprüche 1 bis 5, **dadurch gekennzeichnet, dass** die Ausgangsverbindung mindestens eine Einheit Q aufweist, die einen Rest $R^1$ enthält, der eine Gruppe der Formel (I) aufweist

$$-Si(OR)_{3-a}(R')a \qquad (I),$$

die wie oben definiert ist.

**7.** Verfahren zur Herstellung der vernetzten Amino-Polyorganosiloxan-Verbindung nach einem der Ansprüche 1 bis 6, worin die Amino-Polyorganosiloxan-Ausgangsverbindungen der Kondensation in Gegenwart von Wasser unterworfen werden.

**8.** Zusammensetzungen, enthaltend die vernetzte Amino-Polyorganosiloxan-Verbindung nach einem der Ansprüche 1 bis 6 sowie mindestens einen weiteren funktionalen Bestandteil.

**9.** Zusammensetzung nach Anspruch 8, worin der funktionale Bestandteil aus flüssigen oder festen Phasen ausgewählt wird, die Quellmittel und organische oder anorganische Feststoffe einschließen.

**10.** Zusammensetzung nach Anspruch 8 oder 9, worin die funktionalen Bestandteile aus der Gruppe ausgewählt werden, die besteht aus: Silikaten, anorganischen oder organischen Ionenaustauscher, Duftstoffen, Wirts-Verbindungen, Adsorptionsmittel, Katalysatoren, Nährstofflösungen und für die Reaktion mit Gasen oder Flüssigkeiten bestimmte Chemikalien.

**11.** Verfahren zur Herstellung der Zusammensetzungen nach einem der Ansprüche 8 bis 10, das umfasst:

- Vermischen der Amino-Polyorganosiloxan-Ausgangsverbindungen mit mindestens einem funktionalen Bestandteil und anschließende Vernetzung in Gegenwart von Wasser, oder
- Quellen der vernetzten Amino-Polyorganosiloxan-Verbindungen mit mindestens einem flüssigen funktionalen Bestandteil oder einer Lösung oder Dispersion mindestens eines funktionalen Bestandteils und gegebenenfalls Entfernen des Lösungs- oder Dispergiermittels.

**12.** Verwendung der vernetzten Verbindungen nach einem der Ansprüche 1 bis 6 oder der Zusammensetzungen nach einem der Ansprüche 8 bis 10 zur Ausrüstung oder Behandlung von natürlichen oder synthetischen Fasern oder faserartigen Substraten, zur kosmetischen Anwendung, als Adsorptionsmaterial, als Matrix- bzw. Trägermaterial für funktionale Bestandteile, ausgewählt aus der Gruppe, die besteht aus: Polaren oder unpolaren Quellmitteln, polaren oder unpolaren organischen oder anorganischen Lösungsmitteln, Silikaten, anorganischen oder organischen Ionenaustauschern, Duftstoffen, Parfums, Duftölen, kosmetischen Wirkstoffen, pharmazeutischen Wirkstoffen, Agrochemikalien, Wirts- oder Käfig-Verbindungen, Adsorptionsmitteln, Katalysatoren, Nährstofflösungen, Nährböden für Bakterienkulturen und für die Reaktion mit Gasen oder Flüssigkeiten bestimmten Chemikalien, oder als Antifoggingausrüstung von thermoplastischen Polymeroberflächen.

## Claims

**1.** Cross linked polyorganosiloxane compounds and salt thereof available by condensation-cross linking of amino polyorganosiloxane starting compounds and salts thereof in the presence of water, comprising at least one functional group of the formula (I):

$$Si(OR)_{3-a}(R')_a$$

wherein 'a' is an integer from 0 to 2 and R and R' may be equal or different from each other and each represent an organic radical, and at least one polyalkylenoxy group,
and wherein the amino polyorganosiloxane starting compounds are linear polyamino polyorganosiloxane compounds having $\alpha,\omega$-bound siloxan-containing groups V of the formula

$$-[Q-V]_x-$$

wherein x is > 2,
the moiety Q is selected from the group consisting of

$-NR^1-$,

wherein $R^1$ represents hydrogen or a monovalent organic radical respectively, which also allows the presence of silicon, and wherein if multiple groups $R^1$ are present these may be equal or different from each other,
a saturated or unsaturated diamino-functional heterocycle of the formula (IIa) optionally substituted with other substituents

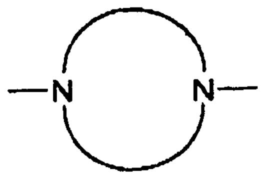

(IIa)

and
a trivalent radical of the formula (IIb):

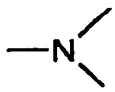

(IIb),

the moieties Q are not linked by means of carbonyl carbon atoms to V moieties, the moieties V are selected among at least one polyvalent straight cyclic or branched saturated, unsaturated or aromatic hydrocarbon radical having up to 1000 carbon atoms, the carbon atoms of the polyorganosiloxane radical optionally being present not being included, which optionally represents one or more groups selected among
-O-,
-C(O)-,
-C(S)-,
$-NR^2-$ ,

wherein $R^2$ represents hydrogen, a monovalent straight, cyclic or branched saturated, unsaturated or aromatic hydrocarbon radical having up to 300 carbon atoms which may contain one or more groups selected among -O-, -NH-, -C(O)- and -C(S)- and which optionally may be substituted by one or more substituents selected from the group consisting of a hydroxyl group, an optionally substituted heterocyclic group comprising one or more nitrogen atoms, polyalkylene oxide radicals, polyorganosiloxanyle radicals and $Si(OR)_{3-a}(R')_a$, wherein a, R and R' are as defined above, wherein if multiple groups-$NR^2$- are present these may be equal or different, and with the provision that the group $-NR^2-$ is attached to a carbonyle carbon atom and/or a thiocarbonyle carbon atom, and
polyvalent polyorganosiloxane radicals, and which optionally may be substituted by one or more hydroxyl groups and/or groups of the formula (I)

$Si(OR)_{3-a}(R')_a$

wherein a, R and R' are as defined above,
with the provision that at least one radical V contains at least one polyorganosiloxane radical and at least one radical V contains at least one polyalkylenoxy group,
and wherein the terminal saturation of the polyvalent groups Q which are attached to each other is by monvalent organic radicals, hydrogen and/or hydroxy.

2. The crosslinked compound according to claim 1, wherein the polyalkylenoxy group is selected among monovalent or bivalent randomly or block type cross linked ethylene oxide /propylenoxide copolymer units.

3. The cross linked compound according to one of claims 1 or 2, wherein the starting compound has at least two units V containing a polyorganosiloxane radical.

4. The cross linked compound according to claim 1, **characterised in that** it comprises no quaternary ammonium group.

5. The cross linked compound according to one of claims 1 to 4, **characterised in that** in the starting compound at least one of the groups V and/or Q has a group of the formula (I)

$$Si(OR)_{3-a}(R')_a \qquad (I)$$

wherein a, R and R' are as defined above.

6. The cross linked compound according to one of claims 1 to 5, **characterised in that** the starting compound has at least one moiety Q containing a radical $R^1$ containing a group of the formula (I)

$$Si(OR)_{3-a}(R')_a \qquad (I)$$

which is as defined above.

7. A process for the production of the cross linked amino polyorganosiloxane compound according to one of claims 1 to 6, wherein the amino polyorganosiloxane starting compounds are submitted to condensation in the presence of water.

8. Compositions containing the cross linked amino polyorganosiloxane compound according to one of claims 1 to 6 as well as at least another functional component.

9. A composition according to claim 8, wherein the functional component is selected among liquid or solid phases comprising swelling agents and organic or inorganic solids.

10. A composition according to claim 8 or 9, wherein the functional components are selected among the group consisting of: silicates, anorganic or organic ion exchangers, perfumes, host compounds, adsorption agents, catalysts, nutrient broths and chemicals intended for reaction with gases or liquids.

11. A process for the production of the compositions according to one of claims 8 to 10, comprising

- mixing the amino polyorganosiloxane starting compounds with at least one functional component followed by cross linking in the presence of water, or
- swelling of the cross linked amino polyorganosiloxane compounds with at least one liquid functional component or a solution or a dispersion of at least one functional component and optionally eliminating the solvent or dispersing agent.

12. Use of the cross linked compounds according to one of claims 1 to 6 or the compositions according to one of claims 8 to 10 for the finish or treatment of natural or synthetic fibres or fibrous substrates for cosmetic use, as adsorption agent, as matrix or support material for functional components, selected from the group consisting of: polar or nonpolar swelling agents, polar or non polar organic or inorganic solvents, silicates, inorganic or organic ion exchangers, fragrances, perfumes, perfume oils, cosmetically active agents, pharmaceutically active agents, agrochemicals, host and cage compounds, adsorption agents, catalysts, nutrient broths, nutrient agars for bacterial cultures and chemicals intended for the reaction with gases or liquids, as an antifogging finish of thermoplastic polymer surfaces.

**Revendications**

1. Composés d'aminopolyorganosiloxanes réticulés et leurs sels, qui peuvent être obtenus par réticulation par condensation de composés de départ d'aminopolyorganosiloxanes et de leurs sels, en présence d'eau, qui présentent au moins un groupement fonctionnel de formule (I) :

**-Si (OR)3-a (R')a (I)**

dans laquelle 'a' est un nombre entier de 0 à 2 et R et R' peuvent être identiques ou différents l'un de l'autre et représentent respectivement un radical organique, et au moins un groupement polyalkylèneoxy, et
dans laquelle les composés de départ d'aminopolyorganosiloxanes sont des composés linéaires de polyaminopolyorganosiloxanes avec des groupements V contenant du siloxane à liaison $\alpha$, $\omega$ de formule suivante :

**-[Q- V]x-**

dans laquelle x a une valeur > 2,
l'unité Q est choisie dans le groupe constitué des groupements:

**-NR1-,**

dans lesquels $R^1$ représente respectivement l'hydrogène ou un radical organique monovalent, qui permet également la présence de silicium et dans lesquels, lorsqu'il y a plusieurs groupements $R^1$, ils peuvent être identiques ou différents l'un de l'autre, un hétérocycle à fonction diamino saturé ou insaturé, substitué éventuellement par d'autres substituants, de formule (IIa) :

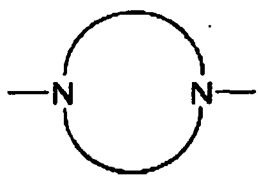

(IIa)

et
un radical trivalent de formule (IIb) :

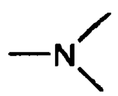

(IIb),

les unités Q ne sont pas liées aux unités V par des atomes de carbone de carbonyle,
les unités V sont choisies parmi au moins un radical hydrocarbure polyvalent, linéaire, cyclique ou ramifié, saturé, insaturé ou aromatique, ayant jusqu'à 1000 atomes de carbone, dans lesquels les atomes de carbone du radical polyorganosiloxane éventuellement présent ne sont pas comptés, et qui peut contenir éventuellement un ou plusieurs groupements, choisis parmi ceux qui suivent:

- O-,
- C(O)-,
- C(S)-,
- $NR^2$-,

dans lesquels $R^2$ représente de l'hydrogène, un radical hydrocarbure monovalent, linéaire, cyclique ou ramifié, saturé, insaturé ou aromatique, ayant jusqu'à 300 atomes de carbone, qui peut contenir un ou plusieurs groupements choisis parmi les groupements -O-, -NH-, -C(O)- et -C(S)-, et qui peut être substitué éventuellement par un ou plusieurs substituants, choisis dans le groupe constitué d'un groupement hydroxyle, d'un groupement hétérocycle éventuellement substitué, contenant de préférence un ou plusieurs atomes d'azote, de radicaux de poly(oxyde d'alkylène), de radicaux d'esters de poly(oxyde d'alkylène), de radicaux de polyorganosiloxanyle et du groupement $-Si(OR)_{3-a}(R')_a$, dans lesquels a, R et R' sont tels que définis ci-dessus, dans lesquels, lorsqu'il y a plusieurs groupements $-NR^2-$, ils peuvent être identiques ou différents, et à condition que le groupement $-NR^2-$ se lie à un atome de carbone de carbonyle et/ou de thiocarbonyle, et
puisse contenir des radicaux de polyorganosiloxane polyvalents, et qui peut être substitué éventuellement par un ou plusieurs groupements hydroxyle et/ou groupements de formule (I) :

**-Si (OR)3-a (R')a**

dans laquelle 'a', R et R' sont tels que définis ci-dessus,
à condition que le au moins un radical V contienne au moins un radical de polyorganosiloxane et que le au moins un radical V contienne au moins un groupement polyalkylèneoxy, et
dans laquelle la saturation terminale des groupements Q et V liés l'un à l'autre s'effectue par le biais de radicaux organiques monovalents, l'hydrogène et/ou un hydroxyle.

**2.** Composé réticulé selon la revendication 1, dans lequel le groupement polyalkylèneoxy est choisi parmi des unités de copolymères oxyde d'éthylène/oxyde de propylène monovalents ou divalents, statiques ou séquencés.

**3.** Composé réticulé selon l'une quelconque des revendications 1 ou 2, dans lequel le composé de départ présente au moins deux unités V qui contiennent un radical de polyorganosiloxane.

**4.** Composé réticulé selon la revendication 1, **caractérisé en ce qu'**il ne présente aucun groupement ammonium quaternaire.

**5.** Composé réticulé selon l'une quelconque des revendications 1 à 4, **caractérisé en ce que**, dans le composé de départ, au moins l'un des groupements V et/ou Q présente un groupement de formule (I),**- Si (OR)3-a (R)a (I),** dans laquelle a, R et R' sont tels que définis ci-dessus.

**6.** Composé réticulé selon l'une quelconque des revendications 1 à 5, **caractérisé en ce que** le composé de départ présente au moins une unité Q qui contient un radical $R^1$, qui comporte un groupement de formule (I) :

**-Si (OR)3-a (R')a (I),**

qui est telle que définie ci-dessus.

**7.** Procédé de fabrication du composé d'aminopolyorganosiloxane réticulé selon l'une quelconque des revendications 1 à 6, dans lequel les composés de départ d'aminopolyorganosiloxanes sont soumis à une condensation en présence d'eau.

**8.** Compositions, contenant le composé d'aminopolyorganosiloxane réticulé selon l'une quelconque des revendications 1 à 6, ainsi qu'au moins un autre constituant fonctionnel.

**9.** Composition selon la revendication 8, dans laquelle le constituant fonctionnel est choisi parmi des phases liquides ou solides, qui englobent des agents gonflants et des solides organiques ou inorganiques.

**10.** Composition selon la revendication 8 ou 9, dans laquelle les constituants fonctionnels sont choisis dans le groupe constitué des composés suivants : silicates, échangeurs d'ions inorganiques ou organiques, substances odorantes, composés hôtes, adsorbants, catalyseurs, solutions nutritives et certains produits chimiques destinés à la réaction avec des gaz ou des liquides.

**11.** Procédé de fabrication des compositions selon l'une quelconque des revendications 8 à 10, comprenant :

- le mélange des composés de départ d'aminopolyorganosiloxanes avec au moins un constituant fonctionnel, suivi d'une réticulation en présence d'eau, ou
- le gonflement des composés d'aminopolyorganosiloxanes réticulés avec au moins un constituant fonctionnel liquide ou une solution ou une dispersion d'au moins un constituant fonctionnel et éventuellement l'élimination du solvant ou du dispersant.

**12.** Utilisation des composés réticulés selon l'une quelconque des revendications 1 à 6 ou des compositions selon l'une quelconque des revendications 8 à 10 pour l'apprêtage ou le traitement de fibres naturelles ou synthétiques ou de substrats fibreux, pour une application cosmétique, comme matériau d'adsorption, comme matériau de matrice ou de support pour des constituants fonctionnels, choisis dans le groupe constitué des composés suivants : agents gonflants polaires ou apolaires, solvants organiques ou inorganiques polaires ou apolaires, silicates, échangeurs d'ions inorganiques ou organiques, substances odorantes, parfums, huiles parfumées, substances actives cosmétiques, substances actives pharmaceutiques, produits agrochimiques, composés hôtes ou cages, adsorbants, catalyseurs, solutions nutritives, supports nutritifs pour cultures bactériennes et produits chimiques destinés à la réaction avec des gaz ou des liquides, ou comme apprêt antibuée de surfaces polymères thermoplastiques.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4322517 A
- US 5062971 A
- US 6552104 B
- US 4657959 A
- US 4691039 A
- US 4752633 A
- US 6403704 B
- US 20020193513 A
- US 6251837 B
- US 4343927 A
- US 5314960 A
- US 6440571 B
- US 4851216 A
- US 4833218 A
- US 4584337 A
- US 4600751 A
- US 5998650 A
- US 6043362 A
- US 6585985 B
- US 132392 A
- US 4758646 A
- US 4859529 A
- US 5484871 A
- US 20020120057 A